# FASCICULE DE BREVET EUROPEEN

(11) **EP 1 876 377 B1**
(45) Date de publication et mention de la délivrance du brevet: **25.06.2014**
(21) Numéro de dépôt: 07012550.5
(22) Date de dépôt: 27.06.2007
(51) Int. Cl.: F16J 15/08

(54) **Joint multifeuilles incorporant au moins un canal**
Verbindung von mehreren Folien, die mindestens einen Kanal einschließt
Multiple-plate gasket comprising at least one channel

(30) Priorité: 06.07.2006 FR 0652836
(43) Date de publication de la demande: 09.01.2008
(73) Titulaire: ElringKlinger AG, 72581 Dettingen (DE)
(72) Inventeur: Burg, Pascal, 87150 Saint-Gence (FR)
(74) Mandataire: Hoeger, Stellrecht & Partner Patentanwälte

(56) Documents cités:
- WO-A-03/071119
- US-A1- 2006 096 362

## Description

La présente invention se rapporte à un joint multi feuilles incorporant au moins un canal.

Selon certains modes de réalisation, un joint de culasse, disposé entre un bloc moteur et une culasse, comprend généralement plusieurs feuilles métalliques ou tôles comportant des ouvertures susceptibles de coopérer avec les chambres de combustion et des orifices permettant le passage de fluides ou des moyens de serrage tels que des tiges filetées.

Les joints de culasse dits dynamiques sont susceptibles de s'adapter d'une part aux variations de l'écartement entre le bloc moteur et la culasse en raison notamment des phénomènes de déformation-dilatation, et d'autre part, aux variations géométriques telles que l'état de surface, le parallélisme, la planéité ou autres, qui sont susceptibles de varier d'un bloc moteur à l'autre ou d'une culasse à l'autre.

Ce type de joint comprend généralement une nervure susceptible d'entourer les ouvertures et/ou les orifices de manière à former une barrière d'étanchéité.

Lorsque le joint est disposé entre le bloc moteur et la culasse, la nervure est fortement comprimée et se déforme de manière à s'adapter à la géométrie des différents éléments. En raison de son élasticité, la nervure est susceptible de se déformer lors du fonctionnement pour s'adapter aux variations de l'écartement entre le bloc moteur et la culasse.

Selon un mode de réalisation, un joint de culasse comprend au moins une tôle dite active sur laquelle est ménagée au moins une nervure et une tôle dite support accolée à la tôle active sur laquelle sont susceptibles d'être rapportées ou ménagées des surépaisseurs afin de limiter les déformations de ladite au moins une nervure pour qu'elle conserve ses propriétés élastiques. De préférence, le joint comprend deux tôles actives disposées de part et d'autre de la tôle support, lesdites tôles actives ayant des formes symétriques par rapport à la tôle support.

Compte tenu des caractéristiques recherchées, les tôles sont réalisées à partir d'un acier ayant une résistance à la traction (Rm) élevée, telle que par exemple supérieure à 1000 MPa.

Pour augmenter le rendement des moteurs et limiter les émissions de gaz nocifs, on cherche à mieux contrôler le cycle moteur, de manière à mieux gérer les différents paramètres, notamment les températures, les pressions ainsi que les temps d'injection, de compression, d'explosion et d'échappement.

Par conséquent, il existe un besoin pour des joints de culasse instrumentés susceptibles de comprendre des capteurs, des sondes ou analogues pour mesurer des grandeurs physiques nécessaires à une meilleure gestion du moteur.

Il existe des capteurs et des sondes adaptés à ce type d'environnement et leur mise en place sur un joint de culasse ne pose pas de réel problème (voir WO-A-03/071119).

Pour alimenter et/ou transmettre les données en direction ou à partir de ces instruments, il est nécessaire de prévoir des fils électriques reliant lesdits instruments placés généralement à proximité de la chambre de combustion à des éléments (calculateur, connecteur, ...) placés à l'extérieur du joint. Ces éléments filaires intégrés dans le joint peuvent être amenés à traverser les lignes d'étanchéité matérialisées par les nervures. Or, ces zones sont soumises à des efforts de compression susceptibles d'endommager lesdits éléments filaires qui les traversent, ces derniers étant simplement rapportés à la surface du joint ou de l'une des tôles.

Par conséquent, les solutions existantes s'apparentent plus à des solutions artisanales qu'à des solutions industrielles susceptibles d'être reproduites à un grand nombre d'exemplaires avec des coûts de production compatibles avec les produits du marché.

Selon une autre problématique, pour certains moteurs, les zones entre les chambres de combustion sont relativement étroites si bien qu'il est difficile de prévoir des conduits de circulation de liquide de refroidissement dans ces zones pour les refroidir. Par conséquent, il existe également un besoin pour réaliser des canaux dans le plan du joint pour acheminer un liquide de refroidissement dans ces zones peu accessibles.

Aussi, la présente invention vise à pallier aux inconvénients de l'art antérieur en proposant un joint multi feuilles incorporant au moins un canal dans le plan du joint, de conception simple afin d'être fabriqué de manière industrielle avec des coûts compatibles avec les prix du marché.

A cet effet, l'invention a pour objet un procédé de réalisation d'un canal dans le plan d'un joint multi feuilles comportant au moins une tôle dite active sur laquelle est ménagée au moins une nervure et un support disposé contre la tôle active, caractérisé en ce qu'il consiste à réaliser le support à partir de deux éléments accolés, à former au moins un évidement à proximité du canal à réaliser et à créer par déformation plastique un sillon s'étendant sur la longueur du canal, ménagé au niveau d'au moins une des surfaces en contact des deux éléments accolés formant le support, la position, les formes et/ou les dimensions dudit au moins un évidement étant adaptées pour permettre à la matière chassée du sillon de fluer vers ledit évidement.

D'autres caractéristiques et avantages ressortiront de la description qui va suivre de l'invention, description donnée à titre d'exemple uniquement, en regard des dessins annexés sur lesquels:
- la figure 1 est une vue de dessus d'un joint de culasse incorporant un canal selon l'invention,
- la figure 2 est une coupe transversale (perpendiculaire au plan du joint) illustrant en détails un canal selon un mode de réalisation,
- la figure 3 est une vue en perspective illustrant la surface d'une feuille du joint dans laquelle est ménagée au moins un canal,
- les figures 4A à 4L sont des coupes transversales illustrant de manière non limitatives différentes variantes de réalisation d'un canal selon l'invention,
- la figure 5 est une coupe transversale illustrant en détails une portion d'un canal réalisé dans une tôle, et
- les figures 6A à 6C sont des coupes illustrant les différentes étapes de réalisation d'un sillon.

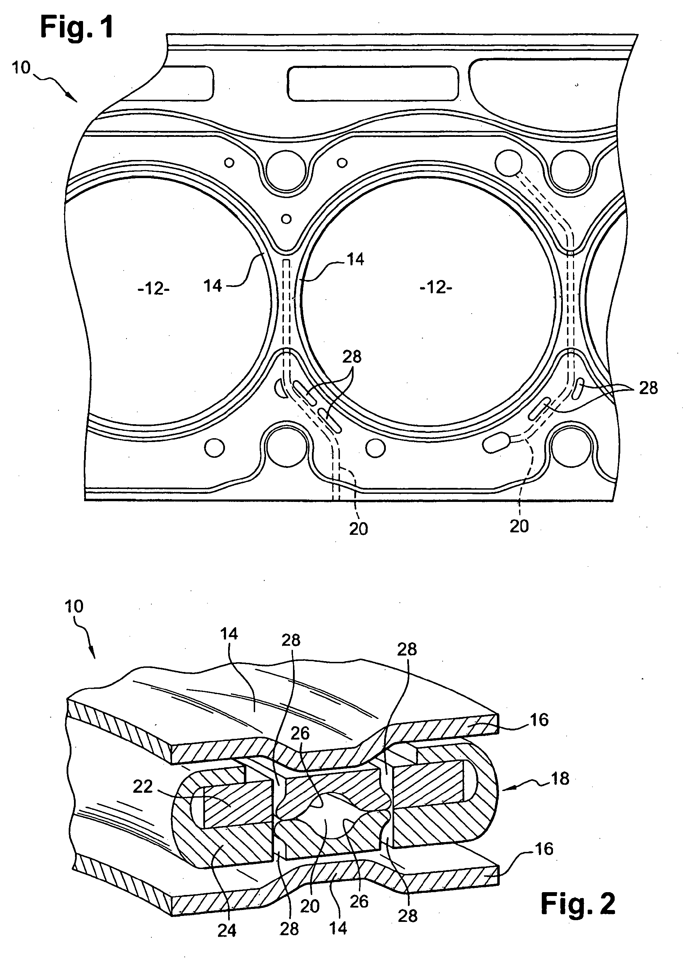

Sur la figure 1, on a représenté en 10 un joint, susceptible d'être intercalé entre des première et seconde surfaces à étancher, par exemple une culasse et un bloc moteur dans le cas d'un joint de culasse.

Le joint 10 comprend au moins deux feuilles ou plaques métalliques, appelée tôles, revêtues ou non.

Le joint comprend au moins une ouverture et/ou orifice 12 de manière à faire communiquer des conduits débouchant respectivement au niveau de chaque surface à étancher. Dans le cas d'un joint de culasse, le joint comprend au moins une ouverture susceptible de coopérer avec une chambre de combustion et des orifices permettant le passage de fluides ou des moyens de serrage tels que des tiges filetées.

De manière connue, le joint comprend au moins une barrière d'étanchéité, de préférence dynamique, sous forme d'une nervure 14, la distance séparant les deux surfaces à étancher étant susceptible de varier en fonctionnement.

Selon les cas, la nervure 14 s'étend de manière continue ou non, de manière circulaire ou non. A titre d'exemple, la nervure 14 peut entourer une ouverture 12 prévue pour une chambre de combustion. Dans ce cas, la nervure peut être sensiblement circulaire et être disposée à une distance sensiblement constante du bord du joint délimitant l'ouverture 12.

La présente invention se rapporte plus précisément au joint comprenant au moins une tôle dite active 16 sur laquelle est ménagée au moins une nervure 14 et un support 18 disposé contre la tôle active, sur lequel sont susceptibles d'être rapportées ou ménagées des surépaisseurs afin de limiter les déformations de ladite au moins une nervure pour qu'elle conserve ses propriétés élastiques. De préférence, le joint comprend deux tôles actives disposées de part et d'autre du support, lesdites tôles actives ayant des formes symétriques par rapport au support 18.

Les tôles actives et le support ont généralement des contours sensiblement identiques.

Pour fixer un ordre de grandeur, le support a une épaisseur de l'ordre de 0,6 mm. Pour obtenir l'effet élastique au niveau de la ou des nervure(s), les tôles actives sont réalisées à partir d'un acier ayant une résistance à la traction Rm élevée, notamment supérieure à 1000 MPa.

La tôle active n'est pas plus détaillée car elle peut avoir différentes formes en fonction des caractéristiques recherchées.

Même si l'invention est décrite appliquée à un joint de culasse, elle n'est aucunement limitée à cette application et couvre différents type de joints, les matériaux utilisés ainsi que les formes et les dimensions pouvant varier.

En fonctionnement, on note que les zones du joint disposées au droit des lignes d'étanchéité, notamment des nervures 14, sont soumises à des efforts de pression importants.

Selon l'invention, le joint comprend au moins un canal 20 ménagé dans l'épaisseur du support 18, ledit support étant composé de deux éléments 22 et 24 sous forme de tôles accolées l'une contre l'autre, au moins un sillon 26 s'étendant sur la longueur du canal 20 étant ménagé au niveau d'au moins une des surfaces en contact des deux éléments 22, 24 formant le support 18.

Par sillon, on entend une forme en creux réalisée au niveau d'une surface qui peut être rectiligne et/ou courbe.

Selon une caractéristique importante de l'invention, le sillon 26 est obtenu par déformation plastique de la matière, notamment par estampage et non par emboutissage, cette déformation plastique n'engendrant des déformations qu'au niveau d'une seule des surfaces des tôles accolées. L'autre surface ne subit aucune déformation et reste sensiblement plane, si bien que la présence du canal n'engendre aucune perturbation pour la fonction d'étanchéité du joint.

Cette solution permet également d'obtenir un procédé industrialisable et des coûts de production compatibles avec les produits du marché.

Selon un mode de réalisation préféré, les tôles formant le support sont réalisées à partir d'un métal ayant des caractéristiques de malléabilité importantes et non un coefficient d'élasticité élevé comme pour les tôles actives.

A titre d'exemple, les tôles accolées 22 et 24 formant le support sont réalisées à partir d'un acier dont la nuance est choisi parmi les aciers pas ou faiblement alliés, les aciers dits « carbone » par exemple.

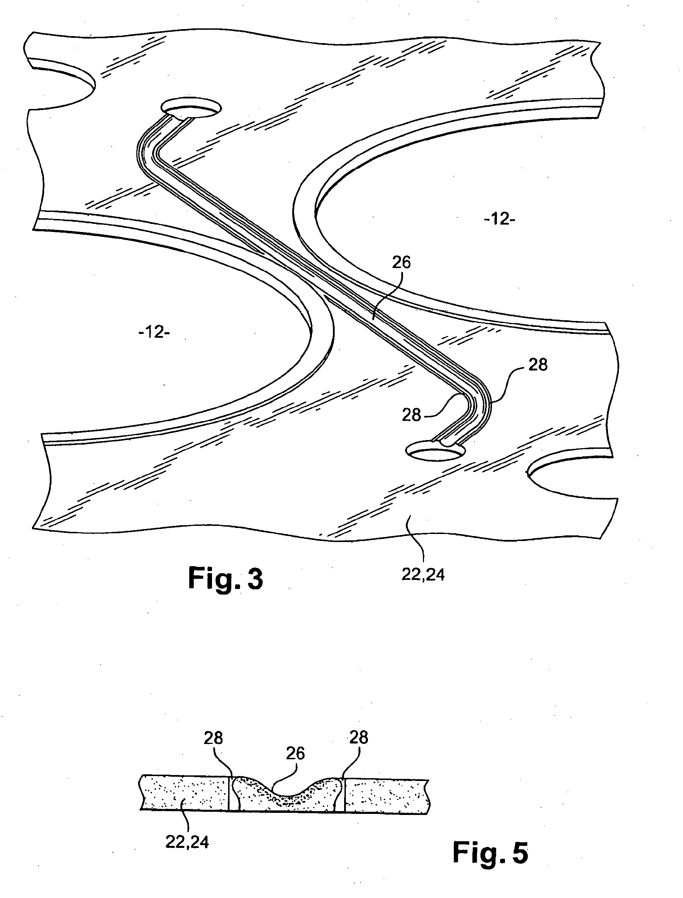

Le fait de déformer la tôle par estampage permet d'obtenir un refoulement de la matière autour du sillon 26, et notamment au niveau des bords latéraux. Ce refoulement de la matière engendre une modification de la structure métallique, et notamment une réduction de la taille des grains autour du sillon comme schématisé sur la figure 5. Cette modification de structure permet d'obtenir une plus grande dureté et résistance à la compression ce qui permet de limiter les risques de constriction du canal.

Selon une autre caractéristique importante de l'invention, les éléments accolés 22, 24 dans lesquels est ménagé au moins un sillon 26 comprennent à proximité dudit sillon au moins un évidement 28 vers lequel peut fluer la matière lors de la déformation plastique. Cette caractéristique permet de limiter le risque de déformation de la tôle, au niveau de laquelle est réalisé le sillon, qui reste sensiblement plane et sans perturber la fonction d'étanchéité des nervures.

L'évidement 28 s'étend parallèlement au sillon sur toute la longueur dudit sillon ou partiellement de manière continue ou discontinue.

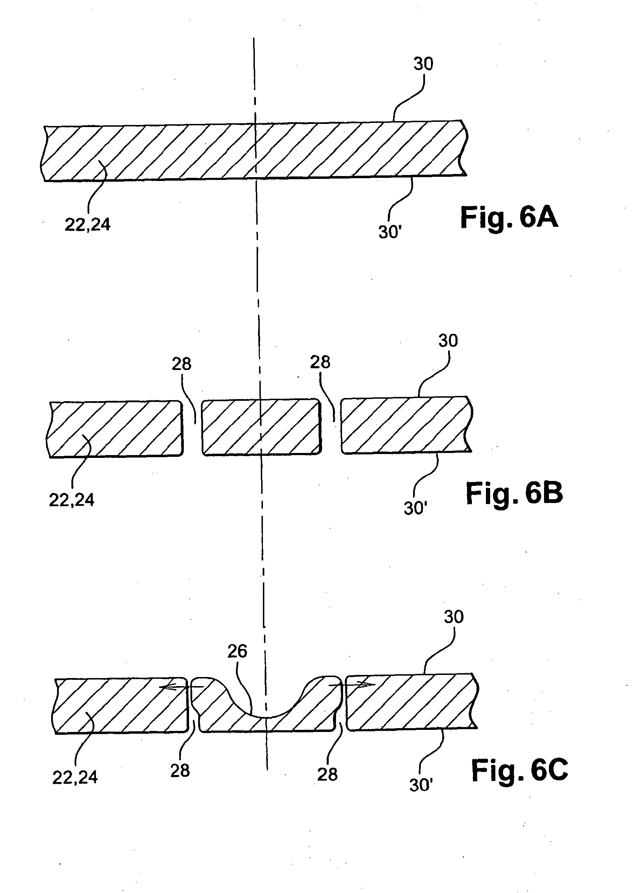

Avantageusement, des évidements 28 sont réalisés de part et d'autre du sillon comme illustré sur la figure 6C.

De préférence, les sections des évidements 28 ont des surfaces sensiblement identiques à celle du sillon 26 afin que la matière chassée du sillon vienne se loger dans les rainures.

Avantageusement, les évidements 28 traversent la tôle 22 ou 24 au niveau de laquelle ils sont ménagés. Cette solution est plus simple à réaliser et permet d'éviter le galbe de la tôle.

La position, les formes et les dimensions des évidements 28 sont adaptées de manière à ce que lors de la formation du sillon, la matière chassée flue en direction dudit évidement et n'engendre aucune déformation sur la surface extérieure du support.

Ainsi, selon l'invention, il est possible de réaliser un canal 20 dans le plan du joint. Les éléments 22, 24 constituant le support 18 ont des surfaces extérieures, en contact avec les tôles actives ou les éléments à étancher, non déformées et sensiblement planes afin de ne pas nuire au fonctionnement des nervures. De plus, les surfaces extérieures du support étant sensiblement planes, le canal n'est pas soumis à une concentration d'efforts de compression susceptible d'engendrer sa constriction.

Ainsi, les canaux peuvent traverser les lignes d'étanchéité sans risque de constriction du canal et de nuisance des fonctions d'étanchéité.

Selon les variantes, le canal 20 peut être borgne, débouchant seulement à une de ses extrémités ou à chacune de ses extrémités. De plus, le joint peut comprendre un ou plusieurs canaux indépendants ou reliés de manière à former un réseau de canaux.

Selon les cas, le canal peut déboucher au niveau du chant du joint, en périphérie du support 18 ou déboucher au niveau d'une des surfaces du support 18.

A titre d'exemple, lorsque le canal est utilisé pour faire communiquer deux conduits non alignés des éléments à étancher en contact avec le joint, ce dernier comprend un canal 20 qui s'étend entre les deux conduits à relier, ménagé dans le support, chacune des extrémités du canal 20 débouchant au niveau d'une des surfaces du support, au droit du conduit correspondant, un orifice étant ménagé dans les tôles actives de manière à faire communiquer les conduits des éléments avec le canal du joint.

Comme illustré sur la figure 1, le canal 20 (dessiné à droite) peut relier deux conduits prévus pour acheminer un liquide de refroidissement et traverser la zone prévue entre deux ouvertures susceptibles de coopérer avec les chambres de combustion. Cette solution permet d'obtenir un refroidissement de zones difficilement accessibles.

Selon une autre application du canal, ce dernier peut être utilisé pour loger des fils lorsque le joint est instrumenté. Dans ce cas, le canal peut avoir une première extrémité non débouchante se terminant sous forme d'une cavité dans laquelle est susceptible de se loger un capteur, une sonde ou analogue et une seconde extrémité débouchante en périphérie du joint.

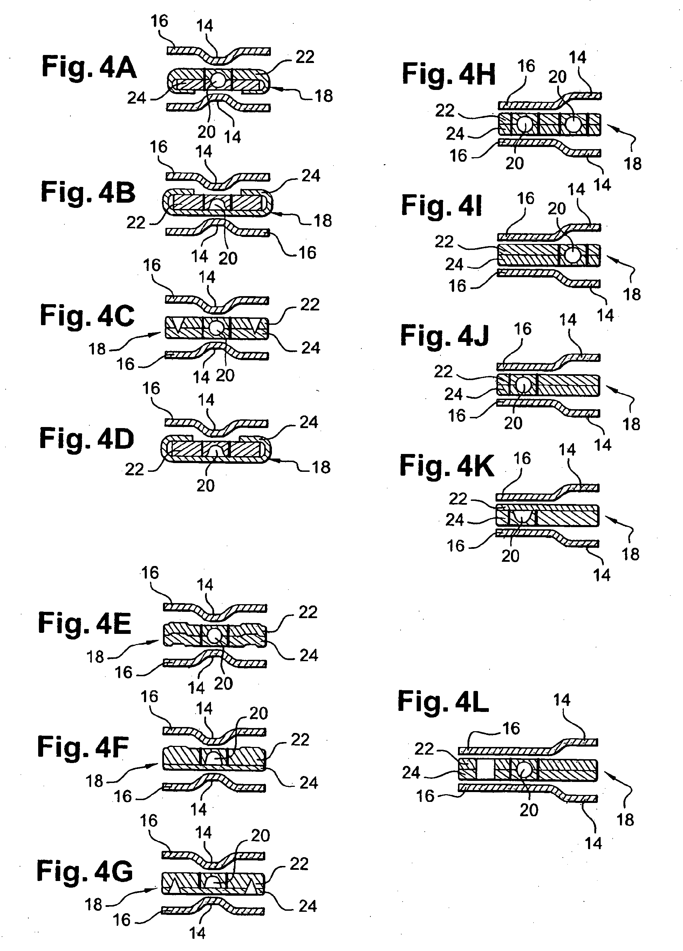

Selon les variantes, les deux éléments accolés 22 et 24 formant le support comprennent au niveau des surfaces en contact des sillons 26, un sur chaque surface en contact, disposés en vis à vis de manière à former le canal 20, comme illustré sur les figures 2, 4A, 4C, 4E, 4H, 4I, 4J.

Selon d'autres variantes illustrées sur les figures 4B, 4D, 4F, 4G, 4K, un seul des éléments accolés 22 ou 24 formant le support 18 comprend au niveau de sa surface en contact un sillon 26, l'autre étant sensiblement plan au droit dudit évidement de manière à le refermer pour former un canal.

De manière à obtenir un procédé industrialisable, les éléments accolés 22 et 24 sont des plaques accolées l'une contre l'autre.

Elles sont solidarisées par tous moyens appropriés. Selon l'invention, elles peuvent être reliées par soudage comme illustré sur les figures 4C, 4G, par des éléments rajoutés comme des rivets ou oeillets comme illustré sur la figure 4L, par des formes complémentaires entre les deux plaques notamment des bords recourbés ménagés au niveau d'une des plaques susceptibles d'enserrer l'autre plaque comme illustré sur les figures 2, 4A, 4B, 4D, par déformation plastique simultanée des deux plaques, notamment poinçonnage, comme illustré sur la figure 4E, par collage ou autre.

Selon les variantes, les plaques accolées 22 et 24 peuvent avoir des épaisseurs sensiblement identiques, notamment lorsque les sillons 26 sont ménagés dans les deux plaques, comme illustré sur les figures 2, 4A, 4C, 4E, 4H, 4I, 4J, 4L.

Selon d'autres variantes, l'une des deux plaques peut se présenter sous la forme d'une fine plaque recouvrant le sillon ménagé dans l'autre plaque plus épaisse, comme illustré sur les figures 4B, 4D, 4F, 4G, 4K.

Selon les variantes, la nervure ou les nervures assurant l'étanchéité au niveau des tôles actives peuvent être complètes et avoir un profil en forme de créneau évasé, comme illustré sur les figures 4A à 4G ou être sous la forme de demi-nervures comme illustré sur les figures 4H à 4L.

Selon un mode de réalisation, les sillons 26 ont une section transversale sous forme de demi cercle. Ainsi, le canal 20 peut avoir une section transversale circulaire lorsque les sillons 26 sont ménagés dans les deux plaques accolées 24 et 26 comme illustré sur les figures 2, 4A, 4C, 4E, 4H, 4I, 4J, 4L ou avoir une section transversale en forme de demi cercle lorsqu'un sillon 26 est ménagé au niveau seulement d'une plaque accolée comme illustré sur les figures 4B, 4b, 4F, 4G, 4K.

Sur les figures 4A à 4L, les évidements 28 sont représentés de manière schématique par un simple trait.

Cependant, les sillons et les canaux peuvent avoir d'autres formes de section.

Pour limiter les risques de constriction du canal, ce dernier sera de préférence sécant avec les lignes d'étanchéité. Ainsi, les portions du canal parallèles à une ligne d'étanchéité seront limitées.

Sur les figures 6A à 6C, on a représenté les différentes étapes de réalisation du sillon. Préalablement, comme illustré sur la figure 1, la plaque accolée 22 ou 24 a une épaisseur sensiblement constante, les faces 30, 30' étant sensiblement planes. En suivant, au moins un évidement 28 est réalisé à proximité de la position théorique du sillon 26 à réaliser, comme illustré sur la figure 6B. Enfin, le sillon est réalisé par déformation plastique, notamment par estampage. Lors de cette déformation, la matière flue vers les évidements 28 ce qui limite les déformations au niveau de la surface 30'.

Selon l'invention, la profondeur du sillon peut représenter 80% de l'épaisseur de la plaque 22, 24 dans laquelle il est réalisé. A titre d'exemple, pour un support de 0,6mm d'épaisseur, on peut réaliser un canal ayant un diamètre de l'ordre de 0,48 mm.

## Revendications

1. Procédé de réalisation d'un canal dans le plan d'un joint multi feuilles comportant au moins une tôle dite active (16) sur laquelle est ménagée au moins une nervure (14) et un support (18) disposé contre la tôle active, **caractérisé en ce qu'**il consiste à réaliser le support à partir de deux éléments (22, 24) accolés, à former au moins un évidement (28) à proximité du canal à réaliser et à créer par déformation plastique un sillon (26) s'étendant sur la longueur du canal, ménagé au niveau d'au moins une des surfaces en contact des deux éléments accolés formant le support, la position, les formes et/ou les dimensions dudit au moins un évidement (28) étant adaptées pour permettre à la matière chassée du sillon de fluer vers ledit évidement (28).

2. Procédé de réalisation d'un canal dans le plan d'un joint multi feuilles selon la revendication 1, **caractérisé en ce qu'**il consiste à réaliser un sillon (26) sur chaque surface en contact des deux éléments accolés (24, 26) formant le support (18).

3. Procédé de réalisation d'un canal dans le plan d'un joint multi feuilles selon la revendication 1, **caractérisé en ce qu'**il consiste à réaliser un sillon (26) sur une surface en contact d'un seul élément accolé (24, 26) formant le support.

4. Procédé de réalisation d'un canal dans un plan d'un joint multi feuilles selon l'une quelconque des revendications précédentes, **caractérisé en ce qu'**il consiste à réaliser le support à partir de deux tôles accolées et solidarisées par tous moyens, la ou les tôles dans lesquelles est réalisé ledit au moins un sillon (26) étant en acier ayant des caractéristiques de malléabilité importantes.

5. Joint multi feuilles comportant au moins une tôle dite active (16) sur laquelle est ménagée au moins une nervure (14) et un support (18) disposé contre la tôle active, **caractérisé en ce qu'**il comprend deux éléments accolés (22, 24) formant le support (18), au moins un sillon (26) obtenu par déformation plastique ménagé au niveau d'au moins une des surfaces en contact desdits deux éléments accolés (22, 24), ledit sillon formant un canal lorsque lesdits éléments (22, 24) sont accolées l'un contre l'autre et au moins un évidement (28) à proximité du canal, la position, les formes et/ou les dimensions dudit au moins un évidement (28) étant adaptées pour permettre à la matière chassée du sillon de fluer vers ledit évidement (28).

6. Joint multi feuilles selon la revendication 5, **caractérisé en ce qu'**il comprend un sillon (26) sur chaque surface en contact des deux éléments accolés (24, 26) formant le support (18).

7. Joint multi feuilles selon la revendication 5, **caractérisé en ce qu'**il comprend un sillon (26) sur une surface en contact d'un seul élément accolé (24, 26) formant le support.

8. Joint multi feuilles selon l'une quelconque des revendications 5 à 7, **caractérisé en ce que** le support (18) comprend deux tôles métalliques accolées et solidarisées par tous moyens, et **en ce que** la structure métallique est modifiée autour du sillon obtenu par une déformation plastique.

9. Joint multi feuilles selon l'une quelconque des revendications 5 à 8, **caractérisé en ce que** le support comprend deux tôles accolées (22, 24) en acier ayant des caractéristiques de malléabilité importantes.

10. Joint multi feuilles selon l'une quelconque des revendications 5 à 9, **caractérisé en ce qu'**il comprend un canal (20) reliant des orifices susceptibles de coopérer avec des conduits prévus pour acheminer un liquide de refroidissement et traversant une zone prévue entre deux ouvertures susceptibles de coopérer avec les chambres de combustion.

## Patentansprüche

1. Verfahren zum Ausbilden eines Kanals in der Ebene einer mehrschichtigen Dichtung, umfassend mindestens ein sogenanntes aktives Blech (16), auf dem mindestens eine Rippe (14) vorgesehen ist, sowie eine Auflage (18), die an dem aktiven Blech angeordnet ist, **dadurch gekennzeichnet, dass** es darin besteht, die Auflage aus zwei aneinandergefügten Elementen (22, 24) zu bilden, mindestens eine Aussparung (28) in der Nähe des auszubildenden Kanals zu bilden, und durch plastische Verformung eine Furche (26) zu erstellen, die sich über die Länge des Kanals erstreckt und an mindestens einer der sich berührenden Oberflächen der beiden aneinandergefügten Elemente, welche die Auflage bilden, vorgesehen ist, wobei die Position, die Formen und/oder die Abmessungen der mindestens einen Aussparung (28) geeignet sind, es dem aus der Furche verdrängten Material zu ermöglichen, in Richtung auf die Aussparung (28) zu fließen.

2. Verfahren zum Ausbilden eines Kanals in der Ebene einer mehrschichtigen Dichtung nach Anspruch 1, **dadurch gekennzeichnet, dass** es darin besteht, eine Furche (26) an jeder der sich berührenden Oberflächen der beiden aneinandergefügten Elemente (24, 26), welche die Auflage (18) bilden, auszubilden.

3. Verfahren zum Ausbilden eines Kanals in der Ebene einer mehrschichtigen Dichtung nach Anspruch 1, **dadurch gekennzeichnet, dass** es darin besteht, eine Furche (26) an einer Kontakt-Oberfläche nur eines der die Auflage bildenden aneinandergefügten Elemente (24, 26) auszubilden.

4. Verfahren zum Ausbilden eines Kanals in einer Ebene einer mehrschichtigen Dichtung nach einem der vorhergehenden Ansprüche, **dadurch gekennzeichnet, dass** es darin besteht, die Auflage aus zwei Blechen zu bilden, die aneinandergefügt und durch beliebige Mittel fest verbunden sind, wobei das Blech oder die Bleche, an dem bzw. an denen die mindestens eine Furche (26) ausgebildet wird, aus Stahl besteht, der Charakteristiken einer großen Verformbarkeit aufweist.

5. Mehrschichtige Dichtung, umfassend mindestens ein sogenanntes aktives Blech (16), auf dem mindestens eine Rippe (14) vorgesehen ist, sowie eine Auflage (18), die an dem aktiven Blech angeordnet ist, **dadurch gekennzeichnet, dass** sie aufweist zwei aneinandergefügte Elemente (22,2 4), welche die Auflage (18) bilden, und mindestens eine durch plastische Verformung erzielte Furche (26), die an mindestens einer der sich berührenden Oberflächen der beiden aneinandergefügten Elemente (22, 24) vorgesehen ist, wobei die Furche einen Kanal bildet, wenn die Elemente (22, 24) aneinandergefügt werden, und mindestens eine Aussparung (28) in der Nähe des Kanals vorgesehen ist, wobei die Position, die Formen und/oder die Abmessungen der mindestens einen Aussparung (28) geeignet sind, es dem aus der Furche verdrängten Material zu ermöglichen, in Richtung auf die Aussparung (28) zu fließen.

6. Mehrschichtige Dichtung nach Anspruch 5, **dadurch gekennzeichnet, dass** sie eine Furche (26) auf jeder Kontaktfläche der beiden aneinandergefügten Elemente (24, 26), welche die Auflage (18) bilden, umfasst.

7. Mehrschichtige Dichtung nach Anspruch 5, **dadurch gekennzeichnet, dass** sie eine Furche (26) auf einer Kontaktfläche eines einzigen der die Auflage bildenden aneinandergefügten Elemente (24, 26) aufweist.

8. Mehrschichtige Dichtung nach einem der Ansprüche 5 bis 7, **dadurch gekennzeichnet, dass** die Auflage (18) zwei Metallbleche umfasst, die aneinandergefügt und durch beliebige Mittel fest verbunden sind, und dass die Metallstruktur um die durch eine plastische Verformung erzielte Furche herum geändert ist.

9. Mehrschichtige Dichtung nach einem der Ansprüche 5 bis 8, **dadurch gekennzeichnet, dass** die Auflage zwei aneinandergefügte Bleche (22, 24) aus Stahl umfasst, welcher Charakteristiken großer Verformbarkeit aufweist.

10. Mehrschichtige Dichtung nach einem der Ansprüche 5 bis 9, **dadurch gekennzeichnet, dass** sie einen Kanal (20) umfasst, der Mündungen verbindet, die in der Lage sind, mit Leitungen zusammenzuwirken, die bereitgestellt werden, um eine Kühlflüssigkeit zu transportieren, und der eine Zone durchquert, die zwischen zwei Öffnungen vorgesehen ist, die in der Lage sind, mit den Brennkammern zusammenzuwirken.

## Claims

1. Method for realising a channel in the plane of a multi-sheet gasket comprising at least one active sheet (16) whereon is arranged at least one rib (14), and a support (18) arranged adjacent the active sheet, **characterised in that** it consists in realising the support by two adjoined elements (22, 24), in forming at least one recess (28) in the vicinity of the channel to be realized and in creating via plastic deformation a groove (26) extending over the length of the channel, arranged on at least one of the surfaces in contact of the two adjoined elements forming the support, with the position, the shapes and/or the dimensions of said at least one recess (28) being adapted to allow the material expelled from the groove to creep towards said recess (28).

2. Method for carrying out a channel in the plane of a multi-sheet joint according to claim 1, **characterised in that** it consists in realising a groove (26) on each contact surface of the two adjoined elements (24, 26) forming the support (18).

3. Method for carrying out a channel in the plane of a multi-sheet joint according to claim 1, **characterised in that** it consists in realising a groove (26) on a contact surface of a single adjoined element (24, 26) forming the support.

4. Method for carrying out a channel in a plane of a multi-sheet joint as claimed in any preceding claim, **characterised in that** it consists in realising the support using two sheets adjoined and fixed to one another by any means, the sheet or sheets wherein is realized said at least one groove (26) being made of steel having substantial ductility characteristics.

5. Multi-sheet joint comprising at least one active sheet (16) whereon is arranged at least one rib (14), and a support (18) arranged adjacent the active sheet, **characterised in that** it comprises two adjoined elements (22, 24) forming the support (18), at least one groove (26) obtained by plastic deformation and arranged on at least one of the contact surfaces of said two adjoined elements (22, 24), said groove forming a channel when said elements (22, 24) are adjoined one against the other, and at least one recess (28) in the vicinity of the channel, with the position, the shapes and/or the dimensions of said at least one recess (28) being adapted to allow the material expelled from the groove to creep towards said recess (28).

6. Multi-sheet joint according to claim 5, **characterised in that** it comprises a groove (26) on each contact surface of the two adjoined elements (24, 26) forming the support (18).

7. Multi-sheet joint according to claim 5, **characterised in that** it comprises a groove (26) on a contact surface of a single adjoined element (24, 26) forming the support.

8. Multi-sheet joint according to any of claims 5 to 7, **characterised in that** the support (18) comprises two metal sheets adjoined and fixed to one another by any means, and **in that** the metal structure is modified around the groove obtained by a plastic deformation.

9. Multi-sheet joint according to any of claims 5 to 8, **characterised in that** the support comprises two adjoined metal sheets (22, 24) made of steel having substantial ductility characteristics.

10. Multi-sheet joint according to any of claims 5 to 9, **characterised in that** it comprises a channel (20) connecting orifices able to cooperate with conduits provided to convey a coolant, said channel passing through a zone provided between two openings able to cooperate with the combustion chambers.
